# EUROPÄISCHE PATENTSCHRIFT

(11) **EP 2 010 892 B1**
(45) Veröffentlichungstag und Bekanntmachung des Hinweises auf die Patenterteilung: **23.10.2013**
(21) Anmeldenummer: 07722206.5
(22) Anmeldetag: 13.04.2007
(51) Int. Cl.: G01N 21/47, G01N 21/88, G01B 11/24, G01N 21/55, B60R 21/20, G01N 21/25, G01N 21/57

(54) **Optisches Diskriminierungsverfahren für mindestens zwei Materialien**
Optical differentiation method for at least two materials
Procédé de discrimination optique d'au moins deux matériaux

(30) Priorität: 13.04.2006 DE 102006017810
(43) Veröffentlichungstag der Anmeldung: 07.01.2009
(73) Patentinhaber: Lüdeker, Wilhelm, 86949 Windach (DE)
(72) Erfinder: Lüdeker, Wilhelm, 86949 Windach (DE)
(74) Vertreter: Winter, Brandl, Fürniss, Hübner, Röss, Kaiser, Polte - Partnerschaft
(86) Internationale Anmeldenummer: PCT/DE2007/000648
(87) Internationale Veröffentlichungsnummer: WO 2007/118459

(56) Entgegenhaltungen:
- EP-A- 0 771 828
- EP-A- 1 030 173
- DE-A1- 4 123 916
- DE-A1- 10 240 439
- JP-A- 2004 138 534
- US-A- 4 677 298

## Beschreibung

Vorliegende Erfindung betrifft ein Verfahren zur Diskriminierung mindestens zweier Materialien, eine Vorrichtung zum Durchführen eines solchen Verfahrens, sowie eine Anlage zum Herstellen einer Sollrissstelle in einem Material.

Bei Fahrzeugen, insbesondere bei Personenkraftfahrzeugen, wird der Innenbereich, insbesondere das Armaturenbrett, mit verschiedensten Materialien verkleidet. Insbesondere kommt dabei eine sogenannte PUR-Haut zum Einsatz. Diese PUR-Haut zeichnet sich durch hohe Stabilität und eine große Robustheit aus und wird durchgängig über die verschiedensten Innenelemente des Armaturenbretts gelegt, so dass ein gleichmäßiger und aufgeräumter Eindruck des Innenraums eines Fahrzeugs entsteht. Deshalb wird die PUR-Haut auch über im Innenraum verteilte Airbags gespannt, so dass für einen Fahrzeuginsassen die Airbags nicht zu erkennen sind. Damit jedoch ein Auslösen und Aufblasen der Airbags problemlos von statten gehen kann, sind in der PUR-Haut sogenannte Sollrissstellen eingebracht. Wird der Airbag ausgelöst, ist durch diese Sollrissstellen sichergestellt, dass die PUR-Haut an diesen Stellen aufreisst und ein Entfalten des Airbags ermöglicht.

Eine solche Sollrissstelle wird dadurch hergestellt, dass die PUR-Haut mit einer Klinge angeschnitten oder angeritzt wird, so dass ein Spalt entsteht. Damit sich dieser Spalt nicht wieder verschließt, wird in den Spalt ein Trennmittel, meist eine Wachsemulsion mit einem Lösungsmittel, eingebracht. Dieses Einbringen geschieht üblicherweise dadurch, dass während des Schnitts mit der Klinge durch eine an der Sohle der Klinge angebrachte Düse die Wachsemulsion in den Spalt eingespritzt wird.

Damit ein Öffnen des Airbags zuverlässig sichergestellt werden kann, darf die Sollrissstelle keine Unterbrechung aufweisen, die größer ist als 4 mm. Aus diesen Gründen muss die gefertigte Sollrissstelle kontrolliert werden. Dazu wird ausgenützt, dass die aufgebrachte Wachsemulsion nach dem Einbringen in die Sollrissstelle beim Schließen der Sollrissstelle teilweise wieder aus dem Spalt heraus gedrückt wird und nach dem Trocknen bzw. nach der Verfüchtigung eines in der Wachsemulsion befindlichen Lösungsmittels als milchig weißer Überzug entlang der Sollrissstelle sichtbar ist. Ist der milchig weiße Überzug nicht vorhanden, ist entweder der Spalt nicht geschnitten worden oder es wurde kein Trennmittel eingebracht. Beide Fälle können, wenn dies über eine Länge von mehr als 4 mm auftritt, zu einem Versagen des Airbags aufgrund von mangelnder Aufreißfähigkeit der PUR-Haut führen. Deshalb wird im Stand der Technik die Sollrissstelle optisch mit Hilfe einer herkömmlichen Videokamera überwacht und die aufgenommenen Bilder werden anschließend einer Bildverarbeitung unterzogen, um etwaige Fehler in der Sollrissstelle zu entdecken.

Nachteilig an diesem und auch an anderen Verfahren, bei denen zwei Materialien mittels Videoaufnahmen und Bildverarbeitung unterschieden werden sollen, ist jedoch, dass zum Einen die nachfolgende Bildbearbeitung zeitaufwendig ist, und zum Anderen Schwankungen in der Lichtintensität und in der spektralen Zusammensetzung des Umgebungslichts die Messungen erschweren und derart ungenau machen können, dass eine Diskriminierung zweier Materialien, beispielsweise Spaltunterbrechungen, nicht mehr wahrgenommen werden kann.
US-B-4677298 offenbart ein lithographisches Tintenstrahldrucksystem, bei dem eine Lichtquelle und eine Vielzahl von Photodetektoren verwendet werden, um die Menge eines mit der Tinte interagierenden Feuchtmittels zu überwachen. Die Lichtquelle bestrahlt eine Farbauftragswalze und es sind die Photodetektoren in einem spiegelnden Winkel und in einem oder mehreren nichtspiegelnden Winkeln angeordnet, um das reflektierte Licht zu überwachen. Eine elektronische Schaltung wertet die Ausgangssignale der Photodetektoren aus.

Aufgabe vorliegender Erfindung ist es, ein Verfahren, eine Vorrichtung und eine Anlage für die optische Diskriminierung zweier Materialien bereitzustellen, die das Vorhandensein eines zweiten Materials in einem ersten Material zuverlässig erkennen kann.

Diese Aufgabe wird gelöst durch ein Verfahren zur optischen Diskriminierung mindestens zweier Materialien gemäß Patentanspruch 1, eine Vorrichtung zum Durchführen eines solchen Verfahrens gemäß Patentanspruch 9, sowie eine Anlage zum Herstellen einer Sollrissstelle gemäß Patentanspruch 14.

Hierbei wird eine Reflexionsauswertung der Materialien durchgeführt, indem die spektralen Reflexionsverteilungsfunktionen der Materialien bestimmt werden. Dies ist insbesondere bei der Fertigung einer Sollrissstelle in einer PUR-Haut von Vorteil, da die PUR-Haut sich in ihren Reflexionseigenschaften deutlich von den Reflexionseigenschaften des Trennmittels unterscheidet.

Da die spektralen Eigenschaften eines Materials materialspezifisch sind, können natürlich auch andere Materialien als PUR-Haut und Trennmittel über die Bestimmung ihrer spektralen Reflexionsverteilungsfunktionen unterschieden werden.

Da die Bestimmung der spektralen Reflexionsverteilungsfunktion durch die Helligkeit und die spektrale Zusammensetzung der Umgebungslichtverhältnisse beeinträchtigt sein kann, wird auch die Hintergrundstrahlung gemessen.

Für Messungen der spektralen Reflexions Verteilungsfunktion selbst kann das Material zudem aktiv beleuchtet werden, um den oben erwähnten Einfluss der Hintergrundstrahlung bzgl. Richtung, Helligkeit und spektraler Zusammensetzung der Beleuchtung auf die spektrale Reflexionsverteilungsfunktion zu reduzieren. Dazu kann eine definierte Lichtquelle, insbesondere eine Laserdiode, mit einer bestimmten Emissionswellenlänge zum Einsatz kommen. Die Beleuchtungseinheiten können gleiche oder auch verschiedene Emissionswellenlängen aufweisen. Zusätzlich kann vor der eigentlichen Bestimmung der spektralen Reflexionsverteilungsfunktion die Reflexion des Materials in einer Referenzmessung bestimmt werden.

Insbesondere ist ein Ausführungsbeispiel vorteilhaft, bei dem eine Beleuchtung des Materials koaxial und adaxial zu der Detektionsrichtung der Reflexion stattfindet. Sind die Beleuchtungseinheit und die Empfangseinheit, wie ein Ausführungsbeispiel zeigt, im Wesentlichen rechtwinklig zu der Oberfläche des Materials ausgerichtet, wird mit einer koaxialen Beleuchtung sowohl diffuse als auch gerichtete Reflexion aufgenommen, da die Empfangseinheit in Richtung der gerichteten Reflexion angeordnet ist. In diesem Fall wird durch eine adaxiale Beleuchtung nur der diffuse Reflexionsanteil aufgenommen.

Um zwischen zwei Materialien unterscheiden zu können, wird in einem Ausführungsbeispiel, eine Messsequenz ausgeführt, bei der in einem ersten Schritt eine Messung des Untergrundsignals bzw. Hintergrundsignals durchgeführt wird, bei der keine aktive Beleuchtung vorhanden ist. Daraufhin wird in einer ersten Messung das Material koaxial zur optischen Achse der Empfangseinheit beleuchtet, und in einer zweiten und letzten Messung das Material adaxial zur optischen Achse der Empfangseinheit angeleuchtet.

Dabei erfolgen die Einzelmessungen vorteilhafterweise in sehr kurzen Abständen, insbesondere weniger als 10µs, wodurch die Messung quasistatisch ist.

Weiterhin ist es vorteilhaft, wenn die Empfangseinheit ein Interferenzfilter aufweist, das vorteilhafterweise auf die Emissionswellenlänge der Beleuchtungseinheiten kalibriert ist. Dadurch kann das Signal zu Rauschverhältnis (SNR) deutlich verbessert werden.

Durch einen Vergleich der adaxialen und koaxialen Messergebnisse kann im Fall der zu unterscheidenden PUR-Haut/Trennmittel leicht zwischen PUR-Haut und Trennmittel unterschieden werden, da die PUR-Haut eine glänzende farbige Oberfläche aufweist, die einen relativ großen Anteil gerichteter Reflexion aufweist, während das Trennmittel ein fast vollständig diffuser Strahler ist.

Weitere Vorteile und vorteilhafte Ausführungsbeispiele sind in der Beschreibung, den Unteransprüchen und den Zeichnungen definiert.

Im Folgenden soll die Erfindung anhand von in den Figuren gezeigten Ausführungsbeispielen näher erläutert werden. Die gezeigten Beispiele sind rein exemplarisch und sollen nicht dazu verwendet werden, die Erfindung einzuschränken.

Es zeigen:
Figur 1: schematische Darstellungen einer spektralen
Reflexionsverteilungsfunktion in drei Beispielen;
Figur 2: ein erstes Ausführungsbeispiel einer erfindungsgemäßen Vorrichtung; und
Figur 3: eine schematische Darstellung eines Ausführungsbeispiels für eine Messsequenz.

Grundsätzlich hängen die spektralen Eigenschaften eines Materials von mehreren Randbedingungen ab:
1. Der Richtung, aus welcher das Objekt beleuchtet wird,
2. der Richtung, aus der das Objekt beobachtet wird,
3. der Helligkeit der Beleuchtung,
4. der spektralen Zusammensetzung der Beleuchtung,
5. den spektralen Reflexionseigenschaften des Materials (Farbe), und
6. der Oberflächenbeschaffenheit des Materials (Helligkeit, Glanzfaktor).

Die materialspezifischen spektralen Eigenschaften nämlich Farbe, Helligkeit und Glanzfaktor können über die Reflexionsverteilungsfunktionen der Oberflächen bestimmt werden, da reale Objekte eine Mischform aus den zwei Reflexionsextremfällen - nämlich einer vollständig diffusen Reflexion, sogenannten Lambertstrahlern, und einer vollständig gerichteten Reflexion, die beispielsweise bei einem idealen Spiegel zu finden ist, aufweisen.

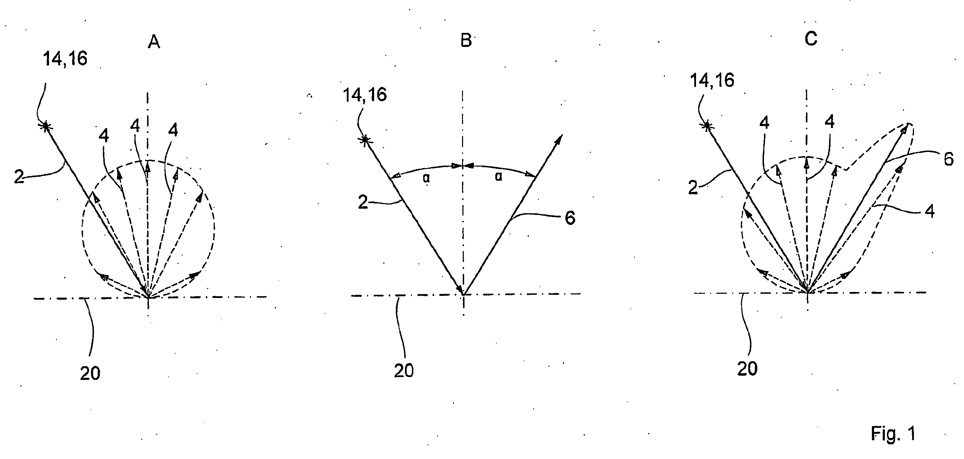

Diese zwei Extremfälle der Reflexion einer Oberfläche und die Reflexion einer realen Oberfläche sind in Figur 1 gezeigt. In Figur 1 zeigt die Teilfigur 1A ein Beispiel einer vollständigen diffusen Reflexion, einem sogenannten Lambertstrahler, bei dem ein auf die Oberfläche einfallender Lichtstrahl 2 von der Oberfläche in sämtliche Raumrichtungen 4 abgestrahlt wird. Der andere Extremfall ist in Teilfigur 1B gezeigt und besteht in einer vollständigen Reflexion 6 eines einfallenden Lichtstrahls 4. Dies geschieht beispielsweise an idealen Spiegeloberflächen. Dabei wird ein einfallender Lichtstrahl 4 in exakt dem gleichen Ausfallswinkel α von der Oberfläche reflektiert mit der er auf die Oberfläche einfällt - Einfallswinkel α.

Eine für reale Objekte typische Mischform ist in Figur 1C dargestellt. Dabei wird ein Teil 6 des einfallenden Lichts 2 reflektiert, während ein anderer Teil in alle Raumrichtungen 4 abgestrahlt wird. Je nach Oberflächenbeschaffenheit eines Materials variieren auch die Anteile an gerichteter Reflexion 6 und Lambertstrahlung 4. So hat beispielsweise eine glänzende Oberfläche einen höheren Anteil an gerichteter Reflexion 6 als eine matt erscheinende.

Diese Unterschiede in der spektralen Verteilung sind Materialspezifisch und können deshalb auch zur Unterscheidung zweier Materialien dienen. Insbesondere ist eine Unterteilung anhand der spektralen Verteilung sinnvoll, wenn die zu untersuchenden Materialien von vorne herein unterschiedlich erscheinen.

Damit jedoch eine Unterscheidung zwischen den Mischformen möglich ist, ist es sinnvoll, wenn auch Beleuchtungs- und Beobachtungsrichtung bzw. eigenschaften definiert sind. Insbesondere da die spektrale Reflexion eines Materials auch von der spektralen Zusammensetzung des auf sie auftreffenden Lichts abhängt. Dies liegt daran, dass, wenn Licht einer spektralen Zusammensetzung auf ein Material auftrifft, aus dem Lichtspektrum jener Teil heraus gefiltert wird, der mit den spektralen Absorptionseigenschaften des Materials übereinstimmt, so dass der reflektierte Anteil diese Anteile nicht mehr aufweist. Das bedeutet beispielsweise, dass für eine schwarze Oberfläche die gesamte spektrale Zusammensetzung des Lichts absorbiert wird, was über einen Absorptionskoeffizienten von 1 definiert wird. Im Gegenzug wird bei einer weiß erscheinenden Oberfläche von dem Material kein Anteil des Lichtspektrums absorbiert, weswegen auch der Absorptionskoeffizient gleich Null ist. Für farbige Objekte nimmt der Absorptionskoeffizient deshalb keinen Wert zwischen 0 und 1 an, was aussagt, dass nur ein Teil des Lichtspektrums heraus gefiltert wurde. Bei diesen farbig erscheinenden Oberflächen spielt die Art der Beleuchtung und dessen spektrale Zusammensetzung eine große Rolle, die jedoch ohne aktive Beleuchtung in realen Umgebungen beispielsweise durch unterschiedliche Arbeitsplatzbeleuchtung (Tageslicht/Kunstlicht) oder durch reflektierte Strahlung von Objekten in der Umgebung nur schwer definierbar ist.

Die Unterscheidung zweier Materialien mittels ihrer spektralen Reflexionsverteilungsfunktion ist vor allem bei den als Verkleidung in Fahrzeugen eingesetzten Materialien, insbesondere bei PUR-Haut von Vorteil. Da in die Verkleidung von Fahrzeugen für das Öffnen von Airbags sogenannte Sollrissstellen eingebracht werden müssen, deren Qualität - also Durchgängigkeit - über die unterschiedlichen Erscheinungsformen von Verkleidungsmaterial und eingebrachtem Trennmittel erfolgt. Die Wachsemulsion wird nach dem Einritzen der PUR-Haut leicht heraus gedrückt und bildet einen milchig weißen Überzug, der hauptsächlich eine diffuse Reflexion aufweist, während die glänzende farbige Oberfläche der Verkleidung einen relativ großen Anteil an gerichteter Reflexion aufweist.

Im Weiteren wird deshalb das Prinzip der Erfindung anhand des Spezialfalls einer Wachsemulsion auf einer PUR-Haut besprochen, die exemplarisch für zwei beliebige Materialien stehen. Das Verfahren insgesamt ist also für beliebige Materialien einsetzbar und soll nicht auf diesen Spezialfall eingeschränkt werden.

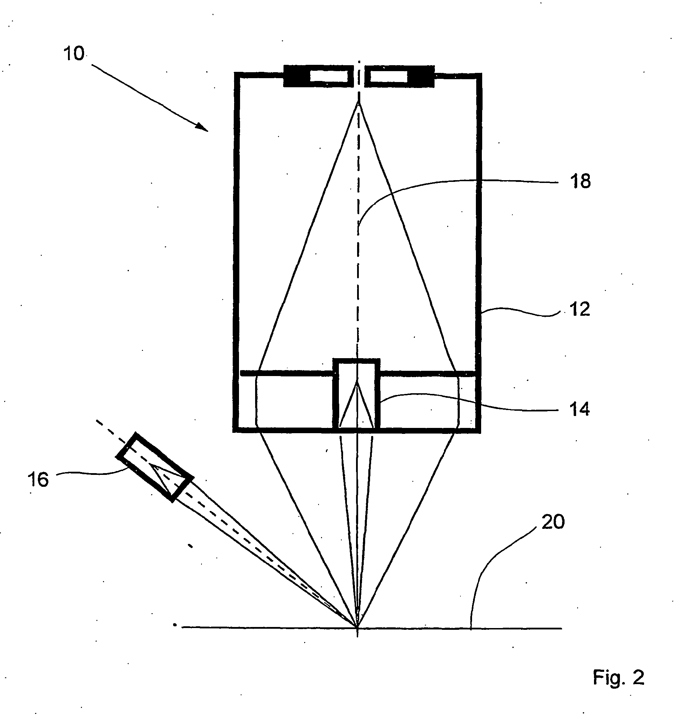

Figur 2 zeigt ein besonders bevorzugtes Ausführungsbeispiel einer Vorrichtung 10 zum Durchführen des erfindungsgemäßen Verfahrens. Prinzipiell besteht eine solche Vorrichtung 10 aus einer Empfangseinheit 12 und zwei Beleuchtungseinheiten 14, 16, die koaxial und adaxial zu einer optischen Achse 18 der Empfangseinheit 12 angeordnet sind. Figur 2 zeigt eine Empfangseinheit 12 mit einer optischen Achse 18 mit der Licht, das von einem Objekt 20 abgestrahlt wird aufgefangen werden kann. Vorzugsweise kann die Empfangseinheit eine Sammellinse und/oder einen Kollimator aufweisen. Des Weiteren ist in Figur 2 eine erste Beleuchtungseinheit 14 und eine zweite Beleuchtungseinheit 16 vorgesehen, wobei die erste Beleuchtungseinheit 14 koaxial zu der optischen Achse 18 der Empfangseinheit 12 angeordnet ist, während die Beleuchtungseinheit 16 adaxial, d. h., in einem bestimmten Winkel, zu der optischen Achse 18 der Empfangseinheit 12 angeordnet ist.

Die axiale bzw. koaxiale Anordnung der Beleuchtungseinheiten 14, 16 stellt sicher, dass nur eine Beleuchtungseinheit, in diesem Fall die koaxiale Beleuchtungseinheit 14 eine gerichtete Reflexion in der Empfangseinheit 12 hervorruft. Die jeweilig andere Beleuchtungseinheit ruft zwar ebenfalls eine gerichtet Reflexion hervor, ist jedoch die Empfangseinheit 12 nicht in Abstrahlrichtung der gerichteten Reflexion angeordnet, kann dieser Reflexionsanteil von der Empfangsoptik 12 nicht aufgefangen werden.

Demnach könnte die Empfangseinheit 12 natürlich auch winklig zu der Oberfläche des Materials 20 angeordnet sein, dann müsste jedoch der Winkel derart angepasst werden, dass der Winkel zwischen der Beleuchtungseinheit 16 und der Oberflächennormalen und der Winkel zwischen der optischen Achse der Empfangseinheit 12 und der Oberflächennormalen genau gleich ist, so dass in diesem Fall durch die adaxiale Beleuchtung mit der Beleuchtungseinheit 16 eine gerichtete Reflexion empfangen werden kann.

Um die Reflexionsanteile zu bestimmen, die beispielsweise durch Umgebungslicht, das ebenfalls das Material beleuchtet, hervorgerufen werden, können die Beleuchtungseinheiten 14 und 16 bei einer sogenannten Hintergrundstrahlungsmessung ausgeschaltet bleiben, so dass die Empfangseinheit 12 nur ein von dem Material abgegebenes Hintergrundsignal empfängt. Dieses Hintergrundsignal kann dann von den eigentlichen Messergebnissen abgezogen werden, so dass die dann erhaltenen Messergebnisse aussagekräftig bezüglich der Unterscheidbarkeit der Materialien sind.

In dem Beispielsfall der Qualitätsüberwachung einer Sollrissstelle in einer PUR-Haut kann eine solche Vorrichtung 10 beispielsweise direkt an der Anlage angebracht sein, die die Sollrissstelle herstellt. Insbesondere kann die Vorrichtung der Klinge, die die Sollrissstelle herstellt, direkt nachgeführt werden.

Da eine solche Anlage jedoch mit einer gewissen Geschwindigkeit betrieben wird, ist es erforderlich, dass die Messungen in einem zeitlich kurzen Abstand hintereinander erfolgen, um eine quasistatische Messung bereitzustellen. Vorteilhafterweise sollte dafür die Gesamtdauer für drei Messungen unter 10 µs liegen. Die Vorrichtung 10 selbst kann mit einem Abstand von bis zu einem Meter oberhalb der Arbeitsfläche angebracht sein, was sicherstellt, dass Spritzer, die beim Einbringen der Wachsemulsion in die Sollrissstelle entstehen können, die empfindliche Vorrichtung nicht beschädigen können.

Des Weiteren kann eine in der Vorrichtung selbst angeordnete oder eine über eine an der Vorrichtung befindliche Schnittstelle erreichbare entfernte Speichereinheit vorgesehen sein, die die Messergebnisse aufzeichnet. Die Beleuchtungseinheiten 14, 16 können beispielsweise durch Laserdioden realisiert sein, die Licht einer bestimmten Wellenlänge abgeben. Dabei können die Laserdioden Licht mit einer gleichen oder aber unterschiedlichen Emissionswellenlänge abgeben.

Aufgrund der kurzen Zeitabstände mit denen die Messungen durchgeführt werden, kann erreicht werden, dass die Messpositionen um weniger als 4µm insbesondere 3,4 µm voneinander abweichen, weshalb sie aufgrund ihrer geringen Ausdehnung gegenüber der Ausdehnung der Messpunkte, d. h., der zu detektierenden Spaltunterbrechungen vernachlässigbar sind.

Zur Verbesserung des Signal zu Rauschverhältnisses (SNR) kann die Empfangseinheit 12 vorteilhafterweise ein hier nicht dargestelltes Interferenzfilter aufweisen, das auf die Emissionswellenlängen der Beleuchtungseinheiten 14 und 16 kalibriert ist.

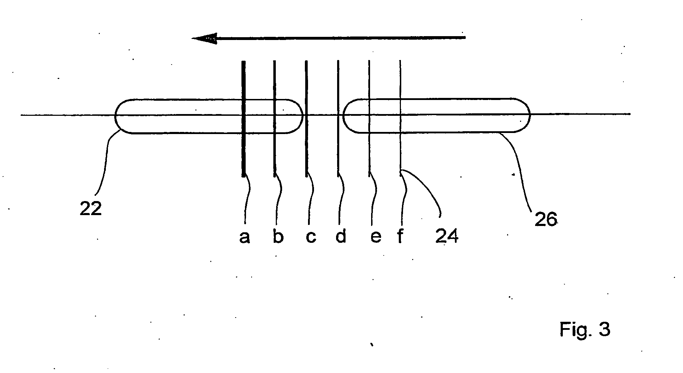

Für eine Detektion von Spaltunterbrechungen sollte die Vorrichtung 10 im Wesentlichen senkrecht über dem Spalt plaziert werden, wobei die Beleuchtungseinheiten 14, 16 derart angeordnet und ausgelegt sind, dass eine wie in Figur 3 dargestellte, senkrecht zu einer Sollrissstelle 22 orientierte Beleuchtungslinie 24 ausgebildet wird. Figur 3 zeigt die Sollrissstelle 22, in die eine Wachsemulsion 26 eingebracht wurde, die beim Schließen Sollrissstelle 22 nach außen gedrückt wurde und einen milchig weißen Überzug bildet.

Des Weiteren zeigt Figur 3, dass die Wachsemulsion 26 nicht vollständig, d. h., nicht durchgängig in der Sollrissstelle 22 vorhanden ist, sondern eine Spaltunterbrechung aufgetreten ist. Da die Wachsemulsion 26 ein leicht flüchtiges Lösungsmittel aufweist, ist die Wachsemulsion während des Einbringens in die Sollrissstelle flüssig, verfestigt sich anschließend jedoch, so dass der milchige Überzug ortsfest an der Sollrissstelle verbleibt und zuverlässig Spaltunterbrechungen dadurch erkannt werden können, dass der milchige Überzug nicht vorhanden ist.

Die in Figur 3 dargestellten Beleuchtungsstreifen 24a bis f verdeutlichen schematisch, dass die Messsequenzen aus drei Einzelmessungen ständig wiederholt werden. Dabei sind die Abstände zwischen den Messsequenzen so gewählt, dass bei einer vorgegebenen Arbeitsgeschwindigkeit Spaltunterbrechungen von mehr als 4 mm zuverlässig detektiert werden können. Das bedeutet beispielsweise, dass bei einer Arbeitsgeschwindigkeit von 20m/min, d. h., ungefähr 330 mm/s und einem angenommenen Abstand der Messsequenzen von 1 mm alle 3 µs eine Messsequenz durchgeführt wird. Üblicherweise ist jedoch die Pulssequenz der Messungen deutlich höher, so dass eine Spaltunterbrechung von mehr als 4mm problemlos detektiert werden kann.

Eine Messsequenz besteht aus einer Messung des Hintergrundsignals, wobei beide Beleuchtungseinheiten 14, 16 ausgeschaltet sind und von der Empfangseinheit 12 nur das Hintergrundsignal des Materials aufgefangen wird, einer ersten Messung die koaxial zur optischen Achse 18 der Empfangseinheit 12 ist, wobei die Sendeeinehit 14 aus Figur 2 zum Einsatz kommt, und einer zweiten Messung die adaxial zur optischen Achse 18 der Empfangseinheit 12 erfolgt, wobei die Sendeoptik 16 aus Figur 2 zum Einsatz kommt.

Um eine Diskriminierungschwelle definieren zu können, wird vor dem eigentlichen Abfahren der Sollrissstelle das System dadurch kalibriert, dass zwei Referenzwerte aufgenommen werden, wobei der eine Referenzwert auf dem PUR-Hautmaterial an einer Stelle ohne Trennmittelauftrag aufgenommen wird und der zweite Referenzwert das System auf die Reflexionseigenschaften des Trennmittels kalibriert.

Anhand der Referenzwerte und der aufgenommenen Messwerte kann unterschieden werden, ob ein Trennmittel in der Sollrissstelle vorhanden ist, oder ob eine Spaltunterbrechung vorliegt.

Vorteilhafterweise können die Messergebnisse über eine Speichervorrichtung gespeichert und abgefragt werden.

Der große Vorteil vorliegenden Verfahrens liegt deshalb auch darin, dass nicht mehr die hochauflösende Datenmaterialien aus der Bildverarbeitung gespeichert werden müssen, sondern lediglich die Ergebnisse der spektralen Reflexions Verteilungsfunktion. Zudem erfolgt eine schnelle Auswertung, wodurch die Überwachung sogar in Echtzeit ausgeführt werden kann, so dass direkt bei der Herstellung der Sollrissstelle gleichzeitig deren Qualität überwacht werden kann.

Offenbart wird ein Verfahren und eine Vorrichtung zur optischen Diskriminierung zweier Materialien, wobei die Diskriminierung über die Bestimmung der spektralen Reflexionsverteilungsfunktion der zwei Materialien erfolgt, sowie eine Anlage zum Herstellen einer Sollrissstelle in einem ersten Material, in das ein zweites Material eingebracht wird.

## Patentansprüche

1. Verfahren zur optischen Diskriminierung mindestens zweier Materialien unter Verwendung von Beleuchtungseinheiten (14, 16) und einer Empfangseinheit (12), wobei das Verfahren zur Überwachung einer in dem ersten Material ausgebildeten Öffnung, insbesondere eines Spalts, eingesetzt wird, und bei der Ausbildung der Öffnung das zweite Material in die Öffnung eingebracht wird, **dadurch gekennzeichnet, dass** die Diskriminierung über die Bestimmung der materialspezifischen spektralen Reflexionsverteilungsfunktionen der Materialien erfolgt, wobei vor der Bestimmung der Reflexions Verteilungsfunktionen der Materialien eine Referenzmessung zur Charakterisierung eines Hintergrundsignals durchgeführt wird, bei der zur Bestimmung von Reflexionsanteilen, die beispielsweise durch ebenfalls das Material beleuchtendes Umgebungslicht hervorgerufen werden, die Beleuchtungseinheiten (14, 16) bei einer Hintergrundstrahlungsmessung ausgeschaltet bleiben, so dass die Empfangseinheit (12) nur ein von dem Material abgegebenes Hintergrundsignal empfängt, dass
die spektralen Reflexionsverteilungsfunktionen der Materialien durch eine zweite Messung einer Mischform aus diffuser Reflexion und gerichteter Reflexion und eine dritte Messung der diffusen Reflexion bestimmt werden, wobei die zweite und die dritte Messung durch eine gerichtete koaxiale bzw. adaxiale Beleuchtung entlang der optischen Achse der Empfangseinheit durchgeführt werden und dass
die Messung des Hintergrundsignals, die zweite Messung und die dritte Messung nacheinander durchgeführt werden, und das Hintergrundsignal von den eigentlichen Messergebnissen abgezogen wird.

2. Verfahren nach Anspruch 1, wobei die Diskriminierung anhand eines Referenzwerts für die spektrale Reflexions Verteilungsfunktion mindestens eines der Materialien erfolgt, wobei vorzugsweise der Referenzwert über eine Kalibrierungsmessung der spektrale Reflexions Verteilungsfunktion mindestens eines der Materialien bestimmt wird.

3. Verfahren nach einem der vorhergehenden Ansprüche, wobei die gerichtete Beleuchtung insbesondere mit mindestens einer der Beleuchtungseinheiten, insbesondere einer Laserdiode ausgeführt wird.

4. Verfahren nach einem der vorhergehenden Ansprüche, wobei die Diskriminierung automatisiert durchgeführt wird.

5. Verfahren nach einem der Ansprüche 1 bis 4, wobei die Messung des Hintergrundsignals, die zweite Messung und die dritte Messung quasistatisch, insbesondere innerhalb einer Gesamtdauer von weniger als 20 µs durchgeführt werden.

6. Verfahren nach einem der vorhergehenden Ansprüche, wobei das erste Material eine ausgeprägte gerichtete Reflexion zeigt, während das zweite Material überwiegend eine diffuse Reflexion zeigt, wobei insbesondere das erste Material ein Material zur Verkleidung eines Armaturenbretts in einem Kraftfahrzeug, insbesondere eine PUR-Haut ist, und das zweite Material ein Trennmittel zum Offenhalten einer in dem Verkleidungsmaterial ausgebildeten Öffnung, insbesondere eine Wachsemulsion, ist.

7. Verfahren nach einem der vorhergehenden Ansprüche, wobei ein nicht vollständiges Ausbilden der Öffnung, insbesondere eine Spaltunterbrechung, dadurch erkannt wird, dass das Trennmittel nicht durchgängig und/oder mit Unterbrechungen in der Öffnung vorhanden ist, wobei die Unterbrechung im Trennmittel insbesondere länger als 4 mm ist.

8. Verfahren nach einem der vorhergehenden Ansprüche, wobei die spektralen Reflexionsverteilungsfunktionen gespeichert werden.

9. Vorrichtung eingerichtet zum Durchführen eines Verfahrens nach einem der vorhergehenden Ansprüche, umfassend eine ersten und einer zweiten Beleuchtungseinheit (14, 16) zum gerichteten Beleuchten eines Materials und eine Empfangseinheit (12) zum Empfangen einer durch die Beleuchtung erzeugten Reflexion, wobei die erste Beleuchtungseinheit koaxial zur Empfangseinheit und die zweiten Beleuchtungseinheit adaxial zur Empfangseinheit angeordnet sind, **dadurch gekennzeichnet, dass** die Vorrichtung derart ausgelegt ist, dass vor der Bestimmung der Reflexions Verteilungsfunktionen der Materialien eine Referenzmessung zur Charakterisierung eines Hintergrundsignals durchführt, bei der zur Bestimmung von Reflexionsanteilen, die beispielsweise durch ebenfalls das Material beleuchtendes Umgebungslicht hervorgerufen werden, die Beleuchtungseinheiten (14, 16) bei einer Hintergrundstrahlungsmessung ausgeschaltet bleiben, so dass die Empfangseinheit (12) nur ein von dem Material abgegebenes Hintergrundsignal empfängt, das von den eigentlichen Messergebnissen abgezogen wird, dass
die spektralen Reflexionsverteilungsfunktionen der Materialien durch eine zweite Messung einer Mischform aus diffuser Reflexion und gerichteter Reflexion und eine dritte Messung der diffusen Reflexion bestimmt werden, und dass
die Messung des Hintergrundsignals, die zweite Messung und die dritte Messung nacheinander durchgeführt werden.

10. Vorrichtung nach Anspruch 9, wobei die Beleuchtungseinheiten Laserdioden mit einer bestimmten Emissionswellenlänge sind, wobei die Laserdioden unterschiedliche oder gleiche Emissionswellenlängen aufweisen.

11. Vorrichtung nach einem der Ansprüche 9 oder 10, wobei die Empfangseinheit ein Interferenzfilter zum Verbessern der Signal zu Rauschverhältnisses aufweist, wobei vorzugsweise das Interferenzfilter der Emissionswellenlänge der Beleuchtungseinheiten, insbesondere der Laserdioden, angepasst ist.

12. Vorrichtung nach einem der Ansprüche 9 bis 11, wobei weiterhin eine Speichereinheit zum Speichern der gemessenen Daten vorhanden ist.

13. Vorrichtung nach Anspruch 12, wobei die Vorrichtung eine Schnittstelle aufweist, über die die Speichereinheit ansprechbar ist.

14. Anlage zum Herstellen einer Sollrissstelle in einem ersten Material, in das ein zweites Material eingebracht wird, mit einem Schneidelement zum Herstellen einer Öffnung in dem ersten Material, einer Einbringvorrichtung zum Einbringen des zweiten Materials in die im ersten Material hergestellte Öffnung, und einer Vorrichtung nach einem der Ansprüche 9 bis 13.

15. Anlage nach Anspruch 14, wobei die Vorrichtung in einem Abstand von weniger als 2m, insbesondere in einem Abstand von 5 bis 50cm über dem ersten Material angeordnet ist, insbesondere wobei die Vorrichtung dem Schneidelement nachgeführt wird, oder wobei die Vorrichtung ortsfest angeordnet ist, und an dem Schneidelement Reflektiervorrichtungen vorhanden sind, die Licht der Beleuchtungseinheiten auf die hergestellte Sollrissstelle reflektieren.

16. Anlage nach einem der Ansprüche 14 oder 15, wobei weiterhin eine Säuberungsvorrichtung, insbesondere eine Druckluftvorrichtung, vorhanden ist, die ein Verunreinigen der Vorrichtung verhindert.

## Claims

1. Method for the optical differentiation of at least two materials using illumination units (14, 16) and a receiving unit (12), the method being used to monitor an opening, in particular a gap, formed in the first material, and the second material being introduced into the opening during formation of the opening, **characterised in that** the differentiation is carried out by determining the material-specific spectral reflection distribution functions of the materials, wherein, prior to the determination of the reflection distribution functions of the materials, a reference measurement for characterising a background signal is performed, in which, in order to determine reflection components caused, for example, by ambient light that is likewise illuminating the material, the illumination units (14, 16) remain switched off during a background radiation measurement so that the receiving unit (12) receives only a background signal emitted by the material, **in that** the spectral reflection distribution functions of the materials are determined by a second measurement of a mixed form of diffuse reflection and directed reflection and a third measurement of diffuse reflection, and **in that**
the measurement of the background signal, the second measurement and the third measurement are performed in succession, and the background signal is subtracted from the actual measuring results.

2. Method according to claim 1, wherein the differentiation is carried out on the basis of a reference value for the spectral reflection distribution function of at least one of the materials, the reference value preferably being determined by way of a calibration measurement of the spectral reflection distribution function of at least one of the materials.

3. Method according to any one of the preceding claims, wherein the second and third measurements are performed by directed coaxial or adaxial illumination along the optical axis of the receiving unit, the directed illumination being carried out in particular with at least one of the illumination units, in particular a laser diode.

4. Method according to any one of the preceding claims, wherein the differentiation is carried out in an automated manner.

5. Method according to any one of claims 1 to 4, wherein the measurement of the background signal, the second measurement and the third measurement are performed quasi-statically, in particular within a total duration of less than 20 µs.

6. Method according to any one of the preceding claims, wherein the first material exhibits pronounced directed reflection while the second material exhibits predominantly diffuse reflection, the first material in particular being a material for cladding an instrument panel in a motor vehicle, in particular a PUR skin, and the second material being a separating agent for keeping open an opening formed in the cladding material, in particular a wax emulsion.

7. Method according to any one of the preceding claims, wherein incomplete formation of the opening, in particular an interruption in the gap, is detected by the separating agent's not being present continuously in the opening and/or being present with interruptions, the interruption in the separating agent in particular being longer than 4 mm.

8. Method according to any one of the preceding claims, wherein the spectral reflection distribution functions are stored.

9. Device arranged to carry out a method according to any one of the preceding claims, comprising a first and a second illumination unit (14, 16) for the directed illumination of a material, and a receiving unit (12) for receiving a reflection produced by the illumination, the first illumination unit being arranged coaxially with respect to the receiving unit and the second illumination unit being arranged adaxially with respect to the receiving unit, **characterised in that**
the device is so configured that, prior to the determination of the reflection distribution functions of the materials, a reference measurement for characterising a background signal is peformed, in which, in order to determine reflection components caused, for example, by ambient light that is likewise illuminating the material, the illumination units (14, 16) remain switched off during a background radiation measurement so that the receiving unit (12) receives only a background signal emitted by the material, which signal is subtracted from the actual measuring results, **in that**
the spectral reflection distribution functions of the materials are determined by a second measurement of a mixed form of diffuse reflection and directed reflection and a third measurement of diffuse reflection, and **in that**
the measurement of the background signal, the second measurement and the third measurement are performed in succession.

10. Device according to claim 9, wherein the illumination units are laser diodes with a specific emission wavelength, the laser diodes having different or the same emission wavelengths.

11. Device according to either claim 9 or claim 10, wherein the receiving unit has an interference filter for improving the signal-to-noise ratio, the interference filter preferably being adapted to the emission wavelength of the illumination units, in particular the laser diodes.

12. Device according to any one of claims 9 to 11, wherein a storage unit for storing the measured data is further present.

13. Device according to claim 12, wherein the device has an interface via which the storage unit can be addressed.

14. System for producing a predetermined breaking point in a first material, into which a second material is introduced, having a cutting element for producing an opening in the first material, an introduction device for introducing the second material into the opening produced in the first material, and a device according to any one of claims 9 to 13.

15. System according to claim 14, wherein the device is arranged at a distance of less than 2 m, in particular at a distance of from 5 to 50 cm, above the first material, in particular wherein the device follows the cutting element, or wherein the device is arranged to be stationary, and reflection devices are present on the cutting element that reflect the light of the illumination units onto the predetermined breaking point that is produced.

16. System according to either claim 14 or claim 15, wherein there is further present a cleaning device, in particular a compressed air device, which prevents the device from being contaminated.

## Revendications

1. Procédé de discrimination optique d'au moins deux matériaux en utilisant des unités d'éclairage (14, 16) et une unité de réception (12), le procédé étant utilisé pour la surveillance d'une ouverture réalisée dans le premier matériau, en particulier d'une fente, et lors de la réalisation de l'ouverture le second matériau étant introduit dans l'ouverture, **caractérisé en ce que** la discrimination est effectuée en déterminant les fonctions de distribution à réflectance spectrales spécifiques au matériau des matériaux, avant la détermination des fonctions de distribution à réflectance des matériaux, une mesure de référence étant réalisée pour la caractérisation d'un signal d'arrière-plan, pour laquelle pour la détermination de parts de réflectance qui sont suscitées par exemple par la lumière ambiante éclairant aussi le matériau, les unités d'éclairage (14, 16) restent éteintes lors d'une mesure de rayonnement d'arrière-plan de sorte que l'unité de réception (12) ne reçoive qu'un signal d'arrière-plan émis par le matériau, **en ce que**
les fonctions de distribution à réflectance spectrales des matériaux sont déterminées par une deuxième mesure d'une forme mixte de réflectance diffuse et de réflectance dirigée et par une troisième mesure de réflectance diffuse, les deuxième et troisième mesures étant réalisées par un éclairage adaxial ou coaxial dirigé le long de l'axe optique de l'unité de réception et **en ce que**
la mesure du signal d'arrière-plan, la deuxième mesure et la troisième mesure sont réalisées les unes après les autres, et le signal d'arrière-plan est déduit des résultats de mesure réels.

2. Procédé selon la revendication 1, la discrimination étant effectuée à l'aide d'une valeur de référence pour la fonction de distribution à réflectance spectrale d'au moins l'un des matériaux, la valeur de référence étant de préférence déterminée par une mesure de calibrage de la fonction de distribution à réflectance spectrale d'au moins l'un des matériaux.

3. Procédé selon l'une quelconque des revendications précédentes, l'éclairage dirigé étant réalisé en particulier avec au moins l'une des unités d'éclairage, en particulier une diode laser.

4. Procédé selon l'une quelconque des revendications précédentes, la discrimination étant réalisée de manière automatisée.

5. Procédé selon l'une quelconque des revendications 1 à 4, la mesure du signal d'arrière-plan, la deuxième mesure et la troisième mesure étant réalisées de manière quasistatique, en particulier sur une durée totale de moins de 20 µs.

6. Procédé selon l'une quelconque des revendications précédentes, le premier matériau montrant une réflectance dirigée caractéristique alors que le second matériau montre principalement une réflectance diffuse, en particulier le premier matériau étant un matériau de revêtement d'un tableau de bord dans un véhicule automobile, en particulier un revêtement PUR, et le second matériau étant un moyen de séparation pour maintenir ouvert une ouverture réalisée dans le matériau de revêtement, en particulier une émulsion de cire.

7. Procédé selon l'une quelconque des revendications précédentes, une réalisation non complète de l'ouverture, en particulier une interruption de fente étant détectée du fait que le moyen de séparation n'est pas présent en continu et/ou est présent avec des interruptions dans l'ouverture, l'interruption dans le moyen de séparation étant en particulier plus longue que 4 mm.

8. Procédé selon l'une quelconque des revendications précédentes, les fonctions de distribution à réflectance spectrales étant enregistrées.

9. Dispositif aménagé pour la réalisation d'un procédé selon l'une quelconque des revendications précédentes, comprenant une première et une seconde unité d'éclairage (14, 16) pour l'éclairage dirigé d'un matériau et une unité de réception (12) pour la réception d'une réflectance générée par l'éclairage, la première unité d'éclairage étant disposée coaxialement à l'unité de réception et la seconde unité d'éclairage étant disposée de manière adaxiale à l'unité de réception, **caractérisé en ce que**
le dispositif est conçu de telle manière qu'avant la détermination des fonctions de distribution à réflectance des matériaux, une mesure de référence soit réalisée pour la caractérisation d'un signal d'arrière-plan, pour laquelle pour la détermination de parts de réflectance qui sont suscitées par exemple par la lumière ambiante éclairant aussi le matériau, les unités d'éclairage (14, 16) restent éteintes lors d'une mesure de rayonnement d'arrière-plan de sorte que l'unité de réception (12) ne reçoive qu'un signal d'arrière-plan émis par le matériau, lequel est déduit des résultats de mesure réels, **en ce que**
les fonctions de distribution à réflectance spectrales des matériaux sont déterminées par une deuxième mesure d'une forme mixte de réflectance diffuse et de réflectance dirigée et par une troisième mesure de réflectance diffuse, et **en ce que**
la mesure du signal d'arrière-plan, la deuxième mesure et la troisième mesure sont réalisées les unes après les autres.

10. Dispositif selon la revendication 9, les unités d'éclairage étant des diodes laser avec une longueur d'onde d'émission déterminée, les diodes laser présentant différentes longueurs d'onde d'émission ou des longueurs d'onde d'émission identiques.

11. Dispositif selon l'une quelconque des revendications 9 ou 10, l'unité de réception présentant un filtre d'interférence pour l'amélioration du signal par rapport au bruit, le filtre d'interférence étant de préférence adapté à la longueur d'onde d'émission des unités d'éclairage, en particulier des diodes laser.

12. Dispositif selon l'une quelconque des revendications 9 à 11, une unité d'enregistrement étant en outre présente pour l'enregistrement des données mesurées.

13. Dispositif de mesure selon la revendication 12, le dispositif présentant une interface lui permettant d'entrer en contact avec l'unité d'enregistrement.

14. Installation pour fabriquer un point de rupture de consigne dans un premier matériau, dans lequel un second matériau est introduit, avec un élément de coupe pour la fabrication d'une ouverture dans le premier matériau, un dispositif d'introduction pour l'introduction du second matériau dans l'ouverture fabriquée dans le premier matériau, et un dispositif selon l'une quelconque des revendications 9 à 13.

15. Installation selon la revendication 14, le dispositif étant disposé à une distance de moins de 2 m, en particulier à une distance de 5 à 50 cm sur le premier matériau, en particulier le dispositif étant asservi à l'élément de coupe ou le dispositif étant disposé fixement et des dispositifs de réflexion, réfléchissant la lumière des unités d'éclairage sur le point de rupture de consigne fabriqué étant présents sur l'élément de coupe.

16. Installation selon l'une quelconque des revendications 14 ou 15, un dispositif de nettoyage, en particulier un dispositif à air comprimé étant en outre présent, lequel empêche que le dispositif ne se salisse.
